# EUROPEAN PATENT APPLICATION

(11) **EP 2 148 457 A2**
(43) Date of publication of application: **27.01.2010**
(21) Application number: 09165264.4
(22) Date of filing: 13.07.2009
(51) Int. Cl.: H04B 10/155

(54) **Optical transmitter**

(30) Priority: 24.07.2008 JP 2008190991
(71) Applicant: Yokogawa Electric Corporation, Musashino-shi Tokyo 180-8750 (JP)
(72) Inventor: Asano, Tetsuri, Musashino-shi Tokyo 180-8750 (JP); Ogusu, Masahiro, Musashino-shi Tokyo 180-8750 (JP)
(74) Representative: Grünecker, Kinkeldey, Stockmair & Schwanhäusser Anwaltssozietät

(57) **Abstract**

An optical transmitter includes a modulation unit, an optical coupler, a photodetector and a control unit. The modulation unit sets up a phase difference between first and second optical signals acquired by branching an input light. The modulation unit modulates the first and second optical signals based on first and second input data signals, respectively. The optical coupler couples the first and second optical signals to generate a phase-modulated optical signal. The photodetector generates a received signal based on the phase-modulated optical signal. The control unit superimposes a dither signal having a frequency on at least one of the first and second optical signals. The control unit performs detection on the dither signal that is included in the received signal output from the photodetector. The control unit controls the phase difference that is to be set up by the modulation unit. The control of the phase difference is made based on a result of the detection.

## Description

### BACKGROUND OF THE INVENTION

### Field of the Invention

The present invention relates to an optical transmitter that transmits a phase-modulated optical signal.

Priority is claimed on Japanese Patent Application No. 2008-190991, filed July 24, 2008, the content of which is incorporated herein by reference.

### Description of the Related Art

All patents, patent applications, patent publications, scientific articles, and the like, which will hereinafter be cited or identified in the present application, will hereby be incorporated by reference in their entirety in order to describe more fully the state of the art to which the present invention pertains.

In recent years, research and development have been made actively to achieve an optical transmission system of a large capacity, which performs long-distance optical transmission. It has been desired to practice the optical transmission systems that transmit and receive phase-modulated optical signals, wherein the optical transmission systems have high maximum transmission rates. The optical transmission systems can use various types of phase modulation such as DPSK (Differential Phase Shift Keying) and DQPSK (Differential Quadrature Phase Shift Keying) in order to rise the maximum transmission rate from 10Gbps (bit per second) up to 40Gbps (bit per second).

Japanese Unexamined Patent Applications, First Publications, Nos. 2004-318052 and 2007-82094 each disclose an optical modulator that includes a Mach-Zehnder waveguide for performing optical modulation of a light emitted from a light source. The Mach-Zehnder waveguide is formed on a substrate that is made of a substance exhibiting electro-optical effect, such as lithium niobate (LiNbO₃).

Concretely, the optical modulator disclosed in the First Publications is a nest type modulator includes a Mach-Zehnder waveguide performing as a main waveguide and two Mach-Zehnder waveguides performing as first and second sub-waveguides. The Mach-Zehnder waveguide as the main waveguide receives a light from a light source and branches the light into branched lights, so that each of the branched lights passes through in a respective one of mutually different light paths and then the branched lights are combined together. The two Mach-Zehnder waveguides performing as the first and second sub-waveguides are formed in each of the optical paths of the main waveguide. Electrodes to which modulated signals are applied are built on the first and second sub-waveguides of the optical modulator. Optical signals are modulated according to the modulated signals applied to each of the electrodes and the modulated optical signals are output from the optical modulator.

The optical modulator has output characteristics that may vary depending on the temperature of usage environment such as a temperature drift and that may vary over time such as a time-dependant drift. For these reasons, each of the first and second sub-waveguides of the optical modulator has additional electrodes that perform as biased electrodes to which a DC bias is applied for controlling the drifts. The main waveguide also has additional electrodes that perform as biased electrodes. The optical modulator has bias control circuits corresponding to the biased electrodes. Each of the bias control circuits controls the voltage of a DC bias applied to a respective one of the biased electrodes.

Each bias control circuit applies a corresponding one of the bias electrodes with a DC bias that is superimposed with a dither signal that has each different frequency. Each bias control circuit receives optical signals output from the optical modulator. Each bias control circuit synchronously detects each received optical signal separately. The synchronous detection is made using a dither signal superimposed on the DC bias. The synchronously detected signal is used to control the voltage of each DC bias applied to a corresponding one of the biased electrode, so as to suppress the temperature drift and the time-dependant drift.

As described above, each biased electrode is disposed on a corresponding one of the bias electrodes that are disposed on the main waveguide and the first and second sub-waveguides. Dither signals with different frequencies are superimposed on the DC bias to be applied to biased electrodes, wherein the dither signals are used to make the synchronous detection of the received optical signal. Thus, the optical transmitter of the prior art allows the bias control circuits to perform the DC-bias voltage controls simultaneously. But the optical transmitter needs a pair of a dither signal source and a synchronous detection circuit for each of the bias control circuits. That is, the number of the bias control circuits will be equal to the number of pairs of dither signal sources and the synchronous detection circuits. This configuration leads to the increased circuit size as the number of the bias control circuits is increased.

In addition, since the optical modulator is integrated in the optical transmitter, the size of the optical modulator or the area for mounting the optical modulator is restricted to some extent. Here, when the optical modulator itself is made miniaturized adjusting to the mounted area, the biased electrodes disposed on the main waveguide and the first and second sub-waveguides may be limited in its dimension that is defmed in a direction along the optical paths of the optical transmitter. When the dimension of the biased electrode becomes short, a DC-bias with a higher voltage (for example, several times higher) is necessary to be applied so as to suppress the drift mentioned above. When the optical modulator is miniaturized, application of a higher voltage may cause an electrical discharge because not only the dimension of the biased electrodes becomes short but also a narrow spatial interval between the bias electrode and other electrodes. The electrical discharge may decrease the reliability of the optical transmitter.

### SUMMARY OF THE INVENTION

In view of the above circumstances, this invention provides an optical transmitter transmitting a phase-modulated optical signal, wherein the optical transmitter has a smaller circuit size and higher reliability.

In one embodiment, an optical transmitter sets up a phase difference between a first optical signal and a second optical signal acquired by dividing a received input light. The optical transmitter may include, but is not limited to, a modulation unit modulating the first and second optical signals respectively based on first and second data signals input from the outside. The optical transmitter outputs a phase-modulated optical signal acquired by multiplexing the first and second optical signals passing through the modulation unit. The optical transmitter includes an optical receiving unit receiving a phase-modulated optical signal and outputting the received optical signal. The optical transmitter includes a control unit superimposing dither signals which have a predetermined frequency on at least one of the first and second optical signals passing through the modulation unit.

The optical transmitter includes a first modulation unit. The first modulation unit sets up a phase difference between two first branched optical signals acquired by further branching the first optical signal mentioned above and modulates respectively the two first branched optical signals based on two data signals of the first data signals mentioned above. The optical transmitter includes a second modulation unit. The second modulation unit sets up a phase difference between two second branched optical signals acquired by further branching the second optical signal mentioned above and modulates respectively the second branched optical signals based on two data signals of the second data signals mentioned above.

The optical transmitter includes a first control unit that superimposes a dither signal having a predetermined frequency on the first branched optical signal passing through the first modulation unit. The optical transmitter performs control of a phase difference between first branched optical signals that is set up in the first modulation unit. The control of the phase difference is based on a result of detection on the dither signal included in the received signal output from the optical receiving unit. The optical transmitter includes a second control unit that superimposes a dither signal having a predetermined frequency on the second branched optical signal passing through the second modulation unit. The optical transmitter performs control of a phase difference between second branched optical signals that is set up in the second modulation unit. The control of the phase difference is based on a result of detection on the dither signal included in the received signal output from the optical receiving unit. The optical transmitter includes a third control unit. The third control unit performs control of a phase difference between the first and second branched optical signals set up by the modulation unit. The control of the phase difference is based on a result of detection on the dither signal included in the received signal output from the optical receiving unit.

The two signals of the first data signals and the two signals of the second data signals are signals that reverse logic mutually or unrelated individual signals.

The dither signal superimposed on the first optical signal and the dither signal that is superimposed on the second optical signal are different in frequency.

Or the dither signal superimposed on the first optical signal and the dither signal superimposed on the second optical signal are identical in frequency and the dither signals are superimposed on the first and second optical signals with time division.

In one embodiment, the optical transmitter superimposes a dither signal having a predetermined frequency on at least one of first and second optical signal passing through a modulating unit. And the optical transmitter controls a phase difference between first and second optical signals based on a result of detecting a dither signal superimposed on a received signal transmitted from the optical receiving unit. There is an effect that circuit size of the optical transmitter can be made small because a composition superimposing a dither signal to perform control of a phase difference between the first and second optical signals can be omitted though it is necessary in traditional optical transmitters. Moreover, the invention needs not superimpose a dither signal to a bias signal controlling a phase lag between the first and the second optical signals. So, voltage of the control signal can be suppressed by equal to the amount of the amplitude of the dither signal. As a result, there is an effect that an electrical discharge can be prevented and high reliability can be obtained.

### BRIEF DESCRIPTION OF THE DRAWINGS

Referring now to the attached drawings which form a part of this original disclosure:
FIG. 1 is a block diagram showing a principal composition of an optical transmitter in accordance with a first embodiment of the invention;
FIG. 2 is a view illustrating a relationship between a bias signal and a detected signal output from a synchronous detection circuit;
FIG. 3 is a block diagram showing a principal composition of an optical transmitter in accordance with a second embodiment of the invention;
FIG. 4 is a block diagram showing an example of a bias control unit;
FIG. 5 is a block diagram showing an example of modification of an optical transmitter in accordance with the second embodiment of the invention;
FIG. 6 is a block diagram showing a principal composition of an optical transmitter in accordance with a third embodiment of the invention; and
FIG. 7 is a block diagram showing an example of modification of an optical transmitter in accordance with the third embodiment of the invention.

### DETAILED DESCRIPTION OF THE INVENTION

Selected embodiments of the present invention will now be described with reference to the drawings. It will be apparent to those skilled in the art from this disclosure that the following descriptions of the embodiments of the present invention are provided for illustration only and not for the purpose of limiting the invention as defined by the appended claims and their equivalents.

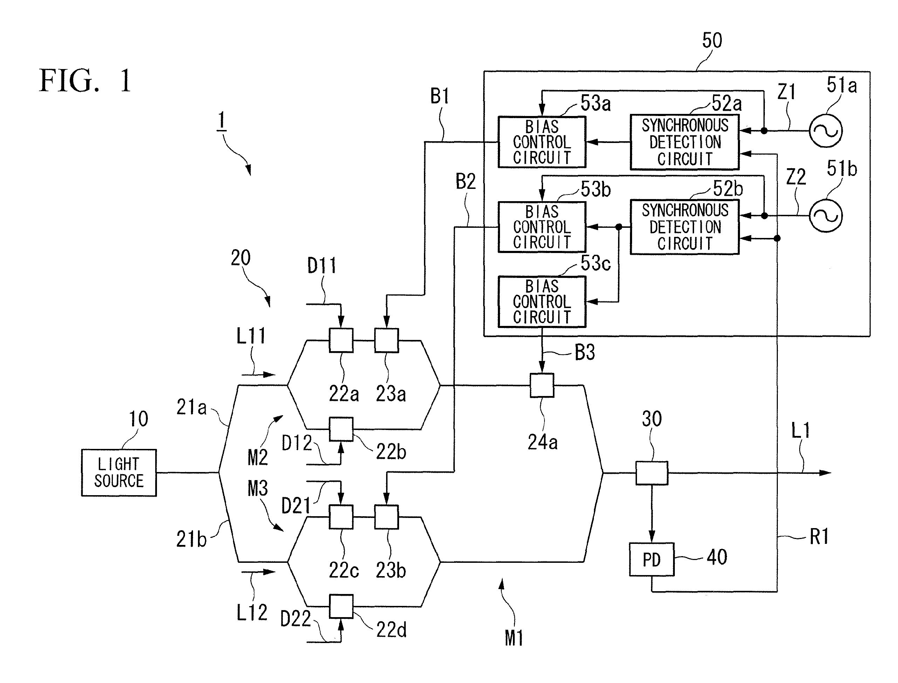

FIG. 1 is a block diagram showing a principal composition of an optical transmitter in accordance with a first embodiment of the present invention. The first embodiment provides an optical transmitter 1. The optical transmitter 1 may include, but is not limited to, a light source 10, a modulation unit 20, an optical splitter such as an optical directional coupler 30, a photodetector 40, and a bias control unit 50. The bias control unit 50 controls the modulation unit 20. The optical splitter such as the optical directional coupler 30 and the photodetector 40 cooperate together to serve as an optical receiving unit. The optical transmitter 1 generates and transmits a phase-modulated optical signal L1. The phase-modulated optical signal L1 is obtained by modulating optical signals based on data signals D11 and D12 and data signals D21 and D22 input from the outside, as shown in FIG. 1. The data signals D11 and D12 are first data signals. The data signals D21 and D22 are second data signals. In addition, the data signals D11 and D12 are differential signals, for example, two complementary signals such as logically inverted and non-inverted signals. The data signals D21 and D22 are other differential signals, for example, other two complementary signals such as logically inverted and non-inverted signals. The optical transmitter 1 transmits a phase-modulated optical signal L1. The phase modulation may be, but is not limited to, a DQPSK modulation.

The light source 10 may be realized by, but is not limited to, a laser diode (LD). The light source 10 emits a continuous wave light (CW light). The modulation unit 20 may include a Mach-Zehnder modulator that performs as a main modulator M1. The main modulator M1 has a pair of arms 21a and 21b. The modulation unit 20 receives the continuous wave light from the light source 10. The modulation unit 20 branches the continuous wave light to an optical signal L11 (a first optical signal) passing through the arm 21a and an optical signal L12 (a second optical signal) passing through the arm 21b. The modulation unit 20 receives, from the outside, the first data signals D11 and D12 and the second data signals D21 and D22. The modulation unit 20 modulates the optical signals L11 and L 12 based on the first data signals D11 and D12 and the second data signals D21 and D22, respectively. The modulation unit 20 controls the phases of the optical signals L11 and L12 under the control of the bias control unit 50. The modulation unit 20 sets up a phase difference between the optical signals L11 and L12. The modulation unit 20 optically couples the modulated optical signals L11 and L12 together to generate a phase-modulated optical signal.

The main modulator M1 has the arms 21a and 21b. The optical signal L11 passes through the arm 21a. The optical signal L12 passes through the arm 21b. The arm 21a includes another Mach-Zehnder modulator that performs as a sub modulator M2 and a bias electrode 24a. The sub modulator M2 has a pair of arms. The arm 21b includes still another Mach-Zehnder modulator that performs as a sub modulator M3. The sub modulator M3 has another pair of arms.

The sub modulator M2 receives the optical signal L11. The sub modulator M2 branches the optical signal L11 into a pair of first branched optical signals. The sub modulator M2 modulates the paired first branched signals based on the data signals D11 and D12, respectively. The sub modulator M2 controls the phase of one of the paired first branched signals under the control of the bias control unit 50. The sub modulator M2 sets up a phase difference between the pair of first branched optical signals under the control of the bias control unit 50. The sub modulator M2 optically couples the first branched signals together to generate a first output optical signal.

The sub modulator M3 receives the optical signal L12. The sub modulator M3 branches the optical signal L12 into a pair of second branched optical signals. The sub modulator M3 modulates the paired second branched signals based on the data signals D21 and D22, respectively. The sub modulator M3 controls the phase of one of the paired second branched signals under the control of the bias control unit 50. The sub modulator M3 sets up a phase difference between the pair of second branched optical signals under the control of the bias control unit 50. The sub modulator M3 optically couples the second branched signals together to generate a second output optical signal.

The sub modulator M2 has modulating electrodes 22a and 22b and a bias electrode 23a. The sub modulator M2 has the pair of arms, one of which has the modulating electrode 22a and the bias electrode 23a, and another arm having the modulating electrode 22b. The modulating electrode 22a receives an application of the data signal D11. The bias electrode 23a receives an application of a bias signal B1 from the bias control unit 50. The modulating electrode 22b receives an application of the data signal D12. The sub modulator M2 modulates the paired first branched signals based on the data signals D11 and D12 that are applied to the modulating electrodes 22a and 22b, respectively. The sub modulator M2 controls the phase of one of the paired first branched signals based on the bias signal B1 that is applied to the bias electrode 23 a. The sub modulator M2 sets up a phase difference between the paired first branched optical signals based on the bias signal B1 that is applied to the bias electrode 23a. The sub modulator M2 optically couples the paired first modulated optical signals together to generate a first modulated optical signal.

The sub modulator M3 has modulating electrodes 22c and 22d and a bias electrode 23b. The sub modulator M3 has the pair of arms, one of which has the modulating electrode 22c and the bias electrode 23b, and another arm having the modulating electrode 22d. The modulating electrode 22c receives an application of the data signal D21. The bias electrode 23b receives an application of a bias signal B2 from the bias control unit 50. The modulating electrode 22d receives an application of the data signal D22. The sub modulator M3 modulates the paired second branched signals based on the data signals D21 and D22 that are applied to the modulating electrodes 22c and 22d, respectively. The sub modulator M3 controls the phase of one of the paired second branched signals based on the bias signal B2 that is applied to the bias electrode 23b. The sub modulator M3 sets up a phase difference between the pair of second branched optical signals based on the bias signal B1 that is applied to the bias electrode 23a. The sub modulator M3 optically couples the paired second modulated optical signals together to generate a second modulated optical signal.

The bias electrode 24a on the arm 21a performs as a phase shifter. The bias electrode 24a receives the first modulated optical signal from the sub modulator M2. The bias electrode 24a receives an application of a bias signal B3 from the bias control unit 50. The bias electrode 24a performs as a phase shifter that shifts the phase of the first optical signal. Thus, the bias electrode 24a as the phase shifter sets up the phase difference between the optical signals L11 and L12.

The arms 21a and 21b are connected at the output of the modulation unit 20. The optical signals L11 and L12 having passed through the arms 21a and 21b respectively are coupled to generate a phase-modulated optical signal as an output optical signal.

The optical receiving unit receives the phase-modulated optical signal from the modulation unit 20. The optical receiving unit generates an electric signal based on the phase-modulated optical signal L1. The optical receiving unit includes the optical splitter such as the optical directional coupler 30 and the photodetector 40. The optical splitter such as the optical directional coupler 30 is disposed on the follower stage of the modulation unit 20. The optical directional coupler 30 receives the phase-modulated optical signal L1 output from the modulation unit 20. The optical directional coupler 30 branches the phase-modulated optical signal at a predetermined branching ratio (for example, a ratio of several hundreds to one). For example, the optical directional coupler 30 reflects the phase-modulated optical signal L1 in part and transmits the same in part. The optical directional coupler 30 may reflect a small portion of the phase-modulated optical signal L1 and may transmit the most of the phase-modulated optical signal L1. The transmitted portion of the phase-modulated optical signal L1 is output from the optical transmitter 1. The reflected portion of the phase-modulated optical signal L1 is transmitted to the photodetector 40. The photodetector 40 receives the reflected portion of the phase-modulated optical signal L1 from the optical directional coupler 30. As the optical directional coupler 30, it is possible for example to use an optical branching device of spatial type such as a beam splitter, an optical branching device of optical fiber type or an optical branching device of planar waveguide type. In addition, a rate of a branching ratio of the optical directional coupler 30 is determined based on a sensitivity of the photodetector 40.

The photodetector 40 receives a phase-modulated optical signal reflected by the optical directional coupler 30. The photodetector 40 generates an electrical signal R1 that indicates the intensity of the phase-modulated optical signal L1. The photodetector 40 may be regarded as a photo-electric converter that converts an optical signal into an electrical signal. A typical example of the photodetector 40 may be, but is not limited to, a photodiode (PD) 40. The photodetector 40 can be realized by any types of device that generate an electrical signal R1 indicating the intensity of the phase-modulated optical signal L1.

The bias control unit 50 receives the phase-modulated optical signal L1 from the light receiving unit, for example, the photodetector 40. The bias control unit 50 generates the bias signals B1, B2, and B3, based on the electrical signal R1 and first and second dither signals Z1 and Z2. The bias control unit 50 superimposes the first and second dither signals Z1 and Z2 onto the bias signals B1, B2, respectively. The bias control unit 50 generates the bias signals B1, on which the dither signal Z1 is superimposed. The bias control unit 50 also generates the bias signals B2, on which the dither signal Z2 is superimposed. The bias control unit 50 further generates the bias signals B3, on which no dither signal is superimposed. The bias signals B3 is free of any dither signal. The bias control unit 50 applies the bias signals B1, B2, and B3 to the optical modulation unit 20 so as to allow the optical modulation unit 20 to control the phase difference between the first and second optical signals L11 and L12 based on the bias signals B1, B2, and B3. The bias control unit 50 may apply the optical modulation unit 20 with the bias signals B1 and B2 at the same timings, and with the bias signal B3 at the different timing from the bias signals B1 and B2. For example, the bias control unit 50 applies the bias signals B1, B2, and B3 to the bias electrodes 23a, 23b and 24a, respectively.

The bias control unit 50 may include dither signal generation units 51a and 51b, synchronous detection circuits 52a and 52b, and bias control circuits 53a, 53b and 53c. The bias control unit 50 applies the bias signals B1 and B2, on which dither signals Z1 and Z2 are superimposed, to bias electrodes 23a and 23b respectively. The bias control unit 50 makes a synchronous detection of the dither signal included in the electrical signal R1 from the photodetector 40. The voltage of the bias signals B1, B2 and B3 are controlled based on the detected signal.

The dither signal generation units 51a and 51b generate dither signals Z1 and Z2 having predetermined frequencies respectively. The frequency of dithering signal Z1 generated in the dither signal generation unit 51a is f1 and the frequency of dithering signal Z2 generated in the dither signal generation unit 51b is f2. The frequency of each of the dither signals Z1 and Z2 can be set to be an arbitrary frequency. In general, the frequency f1 of the dithering signal Z1 may be different from the frequency f2 of the dithering signal Z2.

The synchronous detection circuit 52a receives, from the photodetector 40, the electrical signal R1 that indicates the intensity of the phase-modulated optical signal L1. The synchronous detection circuit 52a further receives the dither signal Z1 having the frequency f1 from the dither signal generation unit 51a. The synchronous detection circuit 52a performs a synchronous detection of the electrical signal R1 output from the photodetector 40 using the dither signal Z1 generated in the dither signal generation unit 51a.

The synchronous detection circuit 52a receives, from the photodetector 40, the electrical signal R1 that indicates the intensity of the phase-modulated optical signal L1. The synchronous detection circuit 52a further receives the dither signal Z2 having the frequency f2 from the dither signal generation unit 51b. The synchronous detection circuit 52b performs a synchronous detection of the electrical signal R1 output from a photodetector 40 using the dither signal Z2 generated in the dither signal generation unit 51b.

The synchronous detection circuit 52a generates a detected signal indicating the voltage of the dither signal Z1 included in the electrical signal R1. The synchronous detection circuit 52b generates a detected signal showing the voltage of the dither signal Z2 included in the electrical signal R1.

The bias control circuit 53a receives the detected signal from the synchronous detection circuit 52a. The bias control circuit 53a also receives the dither signal Z1 from the dither signal generation unit 51a. The bias control circuit 53a superimposes the dither signal Z1 on the bias signal B1. Namely, the bias control circuit 53a generates the bias signal B1 that is superimposed with the dither signal Z1 and applies the bias signal B1 to the bias electrode 23a. The bias control circuit 53a performs control of the voltage of the bias signal B1 based on the detected signal output from the synchronous detection circuit 52a.

The bias control circuit 53b receives the detected signal from the synchronous detection circuit 52b. The bias control circuit 53b also receives the dither signal Z2 from the dither signal generation unit 51b. The bias control circuit 53a superimposes the dither signal Z2 on the bias signal B2. Namely, the bias control circuit 53b generates the bias signal B2 that is superimposed with the dither signal Z2 and applies the bias signal B2 to the bias electrode 23b. The bias control circuit 53b performs control of the voltage of the bias signal B2 based on the detected signal output from the synchronous detection circuit 52b. The bias control circuits 53a and 53b may perform controls of the voltages of the bias signals B1 and B2 at the same timing because the dither signals Z1 and Z2 having the different frequencies are superimposed on the bias signals B1 and B2, respectively.

The bias control circuit 53c receives the detected signal from the synchronous detection circuit 52b. The bias control circuit 53c does not receive either the dither signals Z1 and Z2 from the dither signal generation units 51a and 51b or any other dither signals. The bias control circuit 53c does not superimpose any dither signal on the bias signal B3. The bias control circuit 53c generates the bias signal B3 on which no dither signal is superimposed, so that the bias signal B3 is free of any dither signal. The bias control circuit 53c performs control of the voltage of the bias signal B3 based on the detected signal output from the synchronous detection circuit 52b. The bias control circuit 53c applies the bias signal B3 to the bias electrode 24a disposed on the main modulator M1.

As described above, the dither signal generation unit 51a and the synchronous detection circuit 52a work in cooperation for the bias control circuit 53a. The dither signal generation unit 51b and the synchronous detection circuit 52b work in cooperation for the bias control circuit 53b. The synchronous detection circuit 52b further works alone for the bias control circuit 53c. Namely, the synchronous detection circuit 52b works for both the bias control circuits 53b and 53c.

Any particular dither signal generator that operates for the bias control circuit 53c is not needed. Any particular synchronous detection circuit that operates only for the bias control circuit 53c is not needed. Any dither signal is not superimposed on the bias signal B3. The bias control circuit 53c does not need any dither signal generation unit. The bias control circuit 53c does not need any particular synchronous detection circuit that operates only for the bias control circuit 53c. The bias control circuits 52b and 53c share the synchronous detection circuit 52b commonly.

Namely, the bias control unit 50 includes the first set of the dither signal generation unit 51a and the synchronous detection circuit 52a, and the second set of the dither signal generation unit 51b and the synchronous detection circuit 52b. The bias control unit 50 includes the three bias control circuits 53a, 53b and 53c which generate the bias signals B1, B2, and B3, respectively. The number of the dither signal generation units 51a and 51b is smaller than the number of the bias control circuits 53a, 53b and 53c. The number of the synchronous detection circuits 52a and 52b is smaller than the number of the bias control circuits 53a, 53b and 53c. The bias control unit 50 includes the reduced number of sets of the dither signal generation units 51a and 51b and the synchronous detection circuits 52a and 52b. This configuration reduces the scale of the circuit for a bias control.

In the bias control unit 50, the bias control circuit 53a performs control of voltage of the bias signal B1, and the bias control circuit 53b performs control of voltage of the bias signal B2 at the same time. After the controls of the bias signals B1 and B2, the bias control circuit 53c performs control of voltage of the bias signal B3. Here, signals that the bias control circuits 53a and 53b superimpose on the bias signals B1 and B2 respectively have mutually different frequencies (fl, f2). In the bias control unit 50, the control of voltage of the bias signal B1 by the bias control circuit 53a and the control of voltage of the bias signal B2 by the bias control circuit 53b can be performed at the same time.

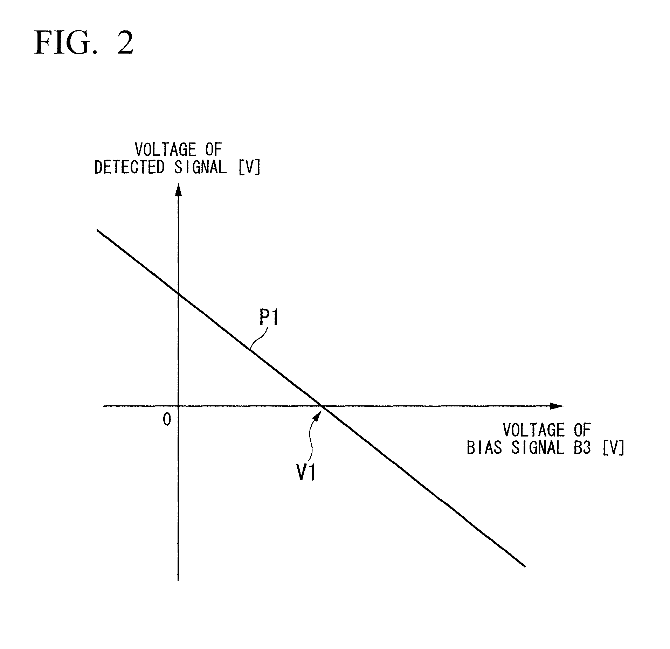

The bias control circuit 53c performs control of the bias voltage B3 so that the voltage of the detected signal output from the synchronous detection circuit 52b becomes zero. FIG. 2 is a diagram showing the relation between the bias signal B3 and the detected signal output from the synchronous detection circuit 52b. As shown in FIG. 2, voltage of the detected signal output from the synchronous detection circuit 52b changes along with the line segment attached the mark P1 in the figure with change of voltage of the bias signal B3. As a result, the bias control circuit 53c performs control of voltage of the bias signal B3, and sets the voltage value of the bias signal B3 up to a bias voltage V 1 where the voltage of the detected signal output from the synchronous detection circuit 52b becomes zero.

The operations of the optical transmitter 1 of the first embodiment are to be explained. The main modulator M1 of the modulation unit 20 receives a continuation light from the light source 10, and the main modulator M1 branches the continuation light to the optical signal L11 passing through the arm 21a and the optical signal L12 passing through the arm 21b by the intensity ratio of 1 to 1 for example. The branched optical signal L11 passing through the arm 21a enters the sub modulator M2 disposed on the arm 21a to be branched furthermore. The branched optical signal L12 passing through the arm 21b enters the sub modulator M3 disposed on the arm 21b to be branched furthermore.

The branched optical signal L11 is further branched into first and second branched lights by the sub modulator M2. The branched optical signal L12 is further branched into third and fourth branched lights by the sub modulator M3. The first branched light is modulated based on the data signal D11 applied to the modulating electrode 22a. The second branched light is modulated based on the data signal D12 applied to the modulating electrode 22b. Moreover, the phase of the first branched light as modulated based on the data signal D11 is then shifted by the bias signal B1 applied to the bias electrode 23a. The phase of the second branched light is set up so that the second branched light has a predetermined phase difference from the first branched light. Then, the first and second branched lights are optically coupled together. Since the bias signal B1 is superimposed on the dither signal Z1, the frequency of the optical signal L11 having passed through the sub modulator M2 includes a frequency component at the frequency f1 of the dither signal Z1.

The third branched light is modulated based on the data signal D21 applied to the modulating electrode 22c. The fourth branched light is modulated based on the data signal D22 applied to the modulating electrode 22d. Moreover, the phase of the third branched light modulated based on the data signal D21 is shifted by the bias signal B2 applied to the bias electrode 23b. The phase of the fourth branched light is set up so that the fourth branched light has a predetermined phase difference from the third branched light. Then, the third and fourth branched lights are optically coupled together. Since the bias signal B2 is superimposed on the dither signal Z2, the frequency of the optical signal L12 having passed through the sub modulator M3 includes a frequency component at the frequency f2 of the dither signal Z2.

A phase of the optical signal L11 passing through the sub modulator M2 is changed by π/2 by the bias signals B3 applied to the bias electrode 24a. As a result, there is a phase difference of π/2 between the optical signal L11 having passed through the sub modulator M2 and the optical signal L12 having passed the sub modulator M3. Then, the optical signal L11 having passed through the arm 21a and the optical signal L12 having passed through the arm 21b are optically coupled together to generate a phase-modulated optical signal. The phase-modulated optical signal is output from the modulation unit 20. The phase-modulated optical signal passes through the optical directional coupler 30, and is transmitted outside as a phase-modulated optical signal L1.

Here, the phase-modulated optical signal which has entered into the optical directional coupler 30 is then received by a photodetector 40, and an electrical signal Rl is output from the photodetector 40. The electrical signal R1 enters into a bias control unit 50. Each of synchronous detection circuits 52a and 52b makes a synchronous detection of the electrical signal R1. As a result, from the synchronous detection circuit 52a, the detected signal showing the voltage of the dither signal Z1 included in the electrical signal R1 is output. And from the synchronous detection circuit 52b, the detected signal showing the voltage of the dither signal Z2 included in the electrical signal R1 is output.

The detected signals of the synchronous detection circuits 52a and 52b are input into bias control circuits 53a and 53b, respectively. Controls of the bias signals B1 and B2 are performed in parallel by the bias control circuits 53a and 53b respectively. Since the detected signals Z1 and Z2 have different frequencies, controls by the synchronous detection circuits 53a and 53b can be performed in parallel. After the control of the bias signals B1 and B2 was completed, control of the bias voltage B3 is performed by the bias control circuit 53c so that the detected signal output from the synchronous detection circuit 52b becomes zero, as is described above with reference to FIG. 2. The bias control circuits 53b and 53c receive the same detected signal from the synchronous detection circuits 52b. It is necessary to perform control of the bias signal B2 by the bias control circuit 53b and control of the bias signal B3 by the bias control circuit 53c at different times. In the above descriptions, the control by the bias control circuit 53c is performed after the control by the bias control circuit 53a and the control by the bias control circuit 53b have been completed. It is possible as a modification that the control by the bias control circuit 53a and the control by the bias control circuit 53b can be performed after the control by the bias control circuit 53c has been completed. The chronological order of performing the controls by the bias control circuits 53a, 53b and 53c can be modified as long as the control by the bias control circuit 53b and the control by the bias control circuit 53c are performed at different timings. The bias signals B1 and B2 for the sub modulators M2 and M3, and the bias signal B3 for the main modulator M1 are set up to be optimal by the above mentioned control.

As described above, the bias control unit 50 includes the dither signal generation units 51 a and 51b and the synchronous detection circuits 52a and 52b. The dither signal generation units 51a and 51b generate the dither signals Z1 and Z2 superimposed on the bias signals B1 and B2, respectively. The synchronous detection circuits 52a and 52b perform synchronous detections of the dither signals Z1 and Z2 included in the electrical signal R1 that has received from the photodetector 40. The bias control circuit 53c performs the control of voltage of the bias signal B3 based on the detected signal that has been supplied from the synchronous detection circuit 52b.

Therefore, neither of a dither signal generation unit and a synchronous detection circuit for the bias control circuit 53c is needed, and circuit scale of the bias control unit 50 can be made smaller. Moreover, it is not necessary to superimpose a dither signal on the bias signal B3, and voltage of the bias signal B3 can be made smaller by amplitude of the dither signal, so electric discharge can be prevented and high reliability can be acquired. However, the bias control circuit 53c uses the detected signal from the synchronous detection circuit 52b. So frequencies of the detected signal used in the bias control circuit 53b and the bias control circuit 53c are equal. As a result, control in the bias control circuit 53b and control in the bias control circuit 53c cannot be performed in parallel. It is necessary to perform control in the bias control circuit 53b and control in the bias control circuit 53c at different times.

In addition, in the first embodiment, the case where the bias control circuit 53c performs control of the voltage of the bias signal B3 based on the detected signal output from the synchronous detection circuit 52b is explained as shown in FIG. 1. But control of the bias signal B3 by the bias control circuit 53c can be performed by a detected signal output from the synchronous detection circuit 52a. The bias control circuit 53a and the bias control circuit 53c can use the detected signals of equal frequency as long as control in the bias control circuit 53a and control in the bias control circuit 53c are performed at different times. In performing such control, the bias control circuit 53c performs control of the bias voltage B3 so that the detected signal output from the synchronous detection circuit 52a serves as zero.

In the first embodiment, the case where the frequency of the dither signals Z1 and Z2 superimposed respectively on the bias signals B1 and B2 are different is explained. But as long as control by the bias control circuit 53a and control by the bias control circuits 53b are performed at different times, the frequency of the dither signals Z1 and Z2 can be the same. Detected signals of a same frequency can be used in different bias control circuits as long as controls in the bias control circuits are performed at different times. The order of performing the controls in the bias control circuits is arbitrary. When frequency of the dither signals Z1 and Z2 are the same, one dither signal generation unit and one synchronous detection circuit can be shared in the bias control circuits 53a, 53b and 53c, so a circuit scale can be made smaller.

Furthermore, in the embodiment explained above, the case where the data signals D11 and D12 and the data signals D21 and D22 are differential signals reversed in logic mutually and respectively is explained. However, the individual signal which is mutually unrelated can be used as these data signals D11, D12, D21 and D22. In such case, the optical transmitter 1 can transmit the phase-modulated optical signal L1 modulated by 16 values.

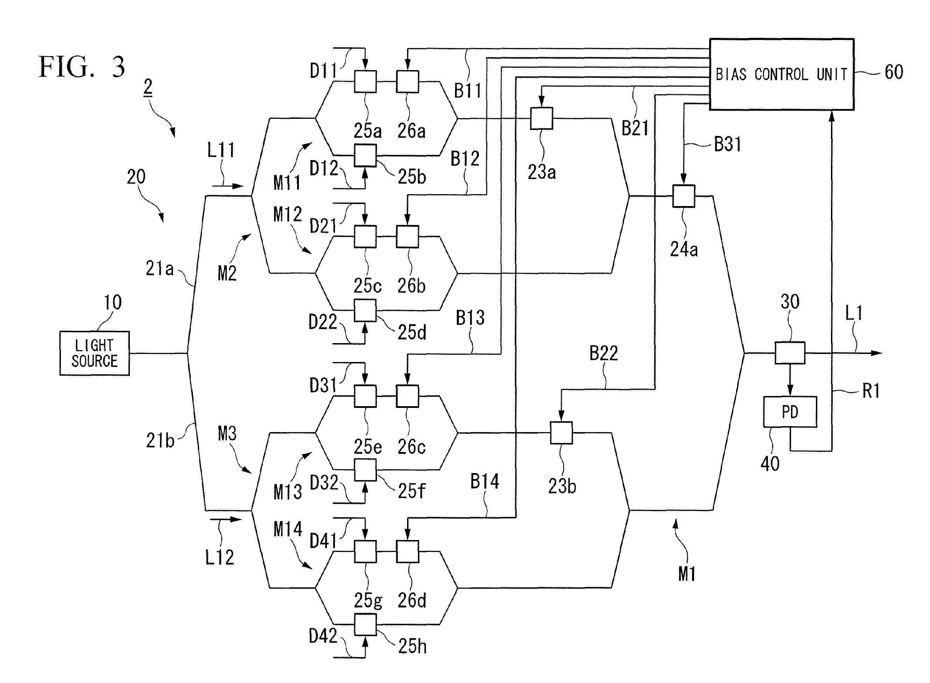

FIG 3 is a block diagram showing a principal composition of an optical transmitter in accordance with a second embodiment of the invention. As shown in FIG. 3, the second embodiment provides an optical transmitter 2. The optical transmitter 2 includes a modulation unit 20 on which sub modulators M11, ---, M14 are disposed. The sub modulators M11, ---, M14 are in the place where the modulating electrodes 22a, ---, 22d are disposed on the sub modulators M2 and M3 in the first embodiment shown in FIG. 1. The optical transmitter 2 includes a bias control unit 60 instead of the bias control unit 50 of the first embodiment shown in FIG. 1.

The sub modulator M11 receives one of branched lights branched by the sub modulator M2, and branches the branched light into two branched optical signals. The sub modulator M11 sets up a phase difference between the two branched optical signals. The two branched optical signals are modulated respectively based on data signals D11 and D12, then the two modulated optical signals are optically coupled together to be output from the sub modulator M11. The sub modulator M12 receives the other of the branched lights branched by the sub modulator M2, and branches the branched light into two branched optical signals. The sub modulator M12 sets up a phase difference between the two branched optical signals. The two branched optical signals are modulated respectively based on data signals D21 and D22, then the modulated optical signals are optically coupled together to be output from the sub modulator M12.

The sub modulator M13 receives one of branched lights branched by the sub modulator M3, and branches the branched light into two branched optical signals. The sub modulator M13 sets up a phase difference between the two branched optical signals. The two branched optical signals are modulated respectively based on data signals D31 and D32, then the two modulated optical signals are optically coupled together to be output from the sub modulator M13. The sub modulator M14 receives the other of the branched lights branched by the sub modulator M3, and branches the branched light into two branched optical signals. The sub modulator M14 sets up a phase difference between the two branched optical signals. The two branched optical signals are modulated respectively based on data signals D41 and D42, then the modulated optical signals are optically coupled together to be output from the sub modulator M14.

On one arm of the sub modulator M11, a modulating electrode 25a applied with the data signal D11 and a bias electrode 26a applied with a bias signal B11 from the bias control unit 60 are disposed. On the other arm of the sub modulator M11, a modulating electrode 25b applied with the data signal D12 is disposed. Two branched lights are modulated respectively by the data signals D11 and D12 applied respectively to the modulating electrodes 25a and 25b. A phase difference between the two branched lights is set up by the bias signal B11 applied to the bias electrode 26a.

On one arm of the sub modulator M12, a modulating electrode 25c applied with the data signal D21 and a bias electrode 26b applied with a bias signal B12 from the bias control unit 60 are disposed. On the other arm of the sub modulator M12, a modulating electrode 25d applied with the data signal D22 is disposed. Two branched lights are modulated respectively by the data signals D21 and D22 applied respectively to the modulating electrodes 25c and 25d. A phase difference between the two branched lights is set up by the bias signal B12 applied to the bias electrode 26b.

On one arm of the sub modulator M13, a modulating electrode 25e applied with the data signal D31 and a bias electrode 26c applied with a bias signal B13 from the bias control unit 60 are disposed. On the other arm of the sub modulator M13, a modulating electrode 25f applied with the data signal D32 is disposed. Two branched lights are modulated respectively by the data signals D31 and D32 applied respectively to the modulating electrodes 25e and 25f. A phase difference between the two branched lights is set up by the bias signal B13 applied to the bias electrode 26c.

On one of arms of the sub modulator M14, a modulating electrode 25g applied with the data signal D41 and a bias electrode 26d applied with a bias signal B14 from the bias control unit 60 are disposed. On the other of arms of the sub modulator M14, a modulating electrode 25h applied with the data signal D42 is disposed. Two branched lights are modulated respectively by the data signals D41 and D42 applied respectively to the modulating electrodes 25g and 25h. A phase difference between the two branched lights is set up by the bias signal B14 applied to the bias electrode 26d.

In addition, a bias electrode 23 a in the sub modulator M2 is applied with a bias signal B21 from the bias control unit 60 and a bias electrode 23b in the sub modulator M3 is applied with a bias signal B22 from the bias control unit 60. And a bias electrode 24a in a main modulator M1 is applied with a bias signal B31 from the bias control unit 60.

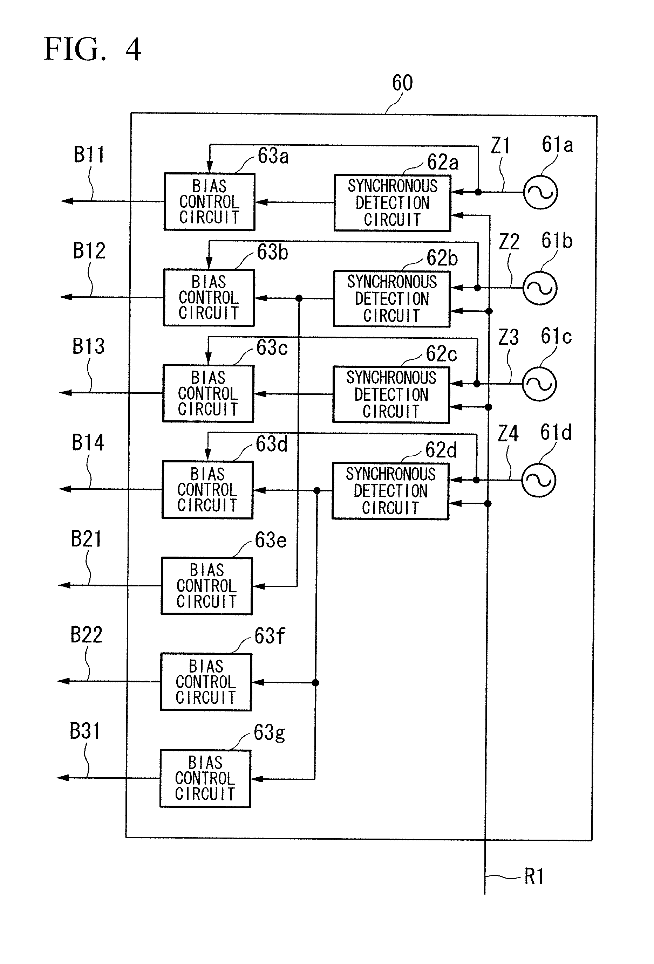

FIG. 4 is a block diagram showing an example of composition of the bias control unit 60 in the second embodiment. As shown in FIG. 4, the bias control unit 60 includes dither signal generation units 61 a, ---, 61d, synchronous detection circuits 62a, ---, 62d, and bias control circuits 63a, ---, 63g. The bias control unit 60 applies bias signals B11, ---, B14, on which a dither signal is superimposed, to bias electrodes 26a, ---, 26d. The bias control unit 60 makes a synchronous detection of dither signals superimposed on a electrical signal R1. The bias control unit 60 performs control of voltage of bias signals B11, B12, B13, B14, B21, B22 and B31 based on the detected signal.

The dither signal generation units 61a, ---, 61d generate dither signals Z1, ---, Z4. Frequencies of the dither signals Z1, ---, Z4 differ mutually. The synchronous detection circuits 62a, ---, 62d make a synchronous detection of the electrical signal R1 output from the photodetector 40 using the dither signals Z1, ---, Z4 generated by the dither signal generation units 61 a, ---, 61d. As a result, the synchronous detection circuits 62a, ---, 62d respectively output detected signals which show voltage of the dither signals Z1, ---, Z4 included in the electrical signal R1.

The bias control circuits 63a, ---, 63d respectively output the bias signals B11, ---, B14 which are generated respectively in the dither signal generation units 61 a, ---, 61d and the dither signals Z1, ---, Z4 are superimposed on respectively. The bias control circuits 63a, ---, 63d respectively perform control of voltage of the bias signals B11, ---, B14 based on the detected signals output from the synchronous detection circuits 62a, ---, 62d respectively. The bias control circuits 63e and 63f respectively perform control of voltage of the bias signals B21 and B22 applied to the bias electrodes 23a and 23b in the sub modulators M2 and M3, based on the detected signals output from the synchronous detection circuits 62b and 62d. The bias control circuit 63b and the bias control circuit 63e use the detected signals from the synchronous detection circuit 62b, and the frequencies of the detected signals used in the bias control circuits 63b and the bias control circuit 63e are equal. Thus, it is necessary to perform controls in the bias control circuit 63b and the bias control circuit 63e at different times. The bias control circuit 63d and the bias control circuit 63f use the detected signals from the synchronous detection circuit 62d, and the frequencies of the detected signals used in the bias control circuit 63d and the bias control circuit 63f are equal. Thus, it is necessary to perform controls in the bias control circuit 63d and the bias control circuit 63f at different times.

The bias control circuit 63g performs control of voltage of the bias signal B31 applied to the electrode 24a in the main modulator M1, based on a detected signal output from the synchronous detection circuit 62d. The bias control circuit 63d, the bias control circuit 63f and the bias control circuit 63g use the detected signals from the synchronous detection circuit 62d, and the frequencies of the detected signals used in the bias control circuit 63d, the bias control circuit 63f and the bias control circuit 63g are equal. Thus, it is necessary to perform controls in the bias control circuit 63d, the bias control circuit 63f and the bias control circuit 63g at different times. As shown in FIG. 4, neither of a dither signal generation unit nor a synchronous detection circuit is included in the bias control circuits 63e, 63f and 63g, and moreover, dither signals are not superimposed on the bias signals B21, B22 and B31 by the bias control circuits 63e, 63f and 63g. Thus, the circuit size of the bias control unit 60 can be made smaller.

Fundamental operation of the optical transmitter 2 of the second embodiment is same as that of the optical transmitter 1 of the first embodiment. Concerning about control of bias signals, first, control of the bias signals B11, ---, B14 is performed respectively in parallel in each of the bias control circuits 63a, ---, 63d. Frequencies of the detected signals used in the bias control circuits 63a, ---, 63d are different, so that the controls in the bias control circuits 63a, ---, 63d can be performed in parallel. Then control of the bias signals B21 and B22 is performed in the bias control circuits 63e and 63f, and finally control of the bias signal B31 is performed in the bias control circuit 63g. However the orders of performing the controls are not limited as long as the controls in the bias control circuits 63a, ---, 63d and the controls in the bias control circuits 63e and 63f and the control in the bias control circuit 63g are performed at different times.

As described above, in the second embodiment, the bias control unit 60 includes the dither signal generation units 61a, ---, 61d that generate respectively the dither signals Z1, ---, Z4 superimposed on the bias signals B11, ---, B14 respectively. And the bias control unit 60 includes the synchronous detection circuits 62a, ---, 62d that respectively make a synchronous detection of the dither signals Z1, ---, Z4 included in the electrical signal R1 output from the photodetector 40. The bias control circuits 63a, ---, 63d respectively perform controls of voltage of the bias signals B11, ---, B14 based on the detected signal output from the synchronous detection circuit 62a, ---, 62d respectively. Frequencies of the detected signals used in the bias control circuits 63a, ---, 63d are different, so that the controls in the bias control circuits 63a, ---, 63d can be performed in parallel. The bias control circuits 63e and 63f perform controls of voltage of the bias signals B21 and B22 based on the detected signal output from the synchronous detection circuit 62b. The bias control circuit 63b and the bias control circuit 63e use detected signals from the synchronous detection circuit 62b, and the frequencies of the detected signals used in the bias control circuit 63b and the bias control circuit 63e are equal. Thus, it is necessary to perform controls in the bias control circuit 63b and the bias control circuit 63e at different times. The bias control circuit 63d and the bias control circuit 63f use the detected signals from the synchronous detection circuit 62d, and the frequencies of the detected signals used in the bias control circuit 63d and the bias control circuit 63f are equal. Thus, it is necessary to perform the controls in the bias control circuit 63d and the bias control circuit 63f at different times. And the bias control circuit 63 g performs control of the bias signal B31 based on the detected signal output from the synchronous detection circuit 62d. The bias control circuit 63d, the bias control circuit 63f and the bias control circuit 63g use the detected signals from the synchronous detection circuit 62d, and the frequencies of the detected signals used in the bias control circuit 63d, the bias control circuit 63f and the bias control circuit 63g are equal, so it is necessary to perform controls in the bias control circuit 63d, the bias control circuit 63f and the bias control circuit 63g at different times.

Therefore, neither of a dither signal generation unit nor a synchronous detection circuit for the bias control circuits 63e, 63f and 63g is needed, and the circuit scale of the bias control unit 60 can be made smaller. Moreover, it is not necessary to superimpose the dither signals on the bias signals B21, B22 and B31, and the voltage of the bias signals can be made smaller by amplitude of the dither signals, so that any electric discharge can be prevented and high reliability of the optical transmitter can be acquired.

In addition, in the second embodiment described above, the control of the bias signal B21 by the bias control circuit 63e can be performed by the detected signal output from the synchronous detection circuit 62a, and the control of the bias signal B22 by the bias control circuit 63f can be performed by the detected signal output from the synchronous detection circuit 62c. The detected signals used in the bias control circuits 63e and 63f can be selected from any of the detected signals output from the synchronous detection circuits 62a, ---, 62d as long as the frequencies of the detected signals used in the bias control circuits 63e and 63f are different. And control of the bias signal B31 by the bias control circuit 63g can be performed by any of the detected signals output from the synchronous detection circuits 62a, ---, 62d. The detected signals used in the bias control circuit 63g can be selected from any of the detected signals output from the synchronous detection circuits 62a, ---, 62d, as long as the control in the bias control circuit 63g is performed at different time from the controls in the bias control circuits 63a, ---, 63d.

Moreover, also in the second embodiment, the frequency of the dither signals Z1, ---, Z4 can be the same as in the first embodiment. When frequency of the dither signals Z1, ---, Z4 are the same, it is necessary to perform the controls by the bias control circuits 63a, ---, 63d at different times and to perform controls by the bias control circuits 63e and 63f at different times. The frequencies of the detected signals used in the bias control circuits 63a, ---, 63g, so it is necessary to perform controls in the bias control circuits 63a, ---, 63g at different times. The order of performing controls in the bias control circuits 63a, ---, 63g is arbitrary. When the frequency of the dither signals Z1, ---, Z4 are the same, one dither signal generation unit and one synchronous detection circuit can be shared in the bias control circuits 63a, ---, 63d, so that the circuit scale of the control unit can be made smaller.

Furthermore, the data signals D11 and D12, D21 and D22, D31 and D32, and D41 and D42 input from outside may be differential signals which reversed logic mutually and respectively, or may be individual signals which are mutually unrelated. When the data signals D11 and D12, D21 and D22, D31 and D32, and D41 and D42 are differential signals, the optical transmitter 2 can transmit the phase-modulated optical signal L1 modulated by 16 values. When the data signals are individual signals mutually unrelated, the optical transmitter 2 can transmit the phase-modulated optical signal L1 modulated by 256 values.

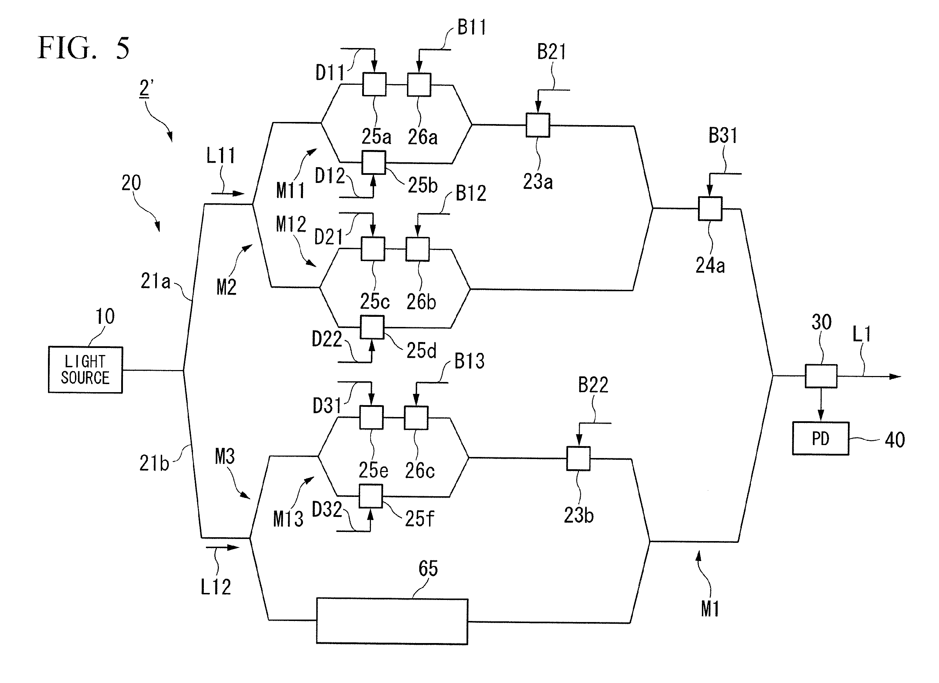

FIG. 5 is a figure showing a modification of the optical transmitter of the second embodiment of the invention. As shown in FIG. 5, the modification provides an optical transmitter 2'. The optical transmitter 2' includes an optical attenuator 65 instead of the sub modulator M14 shown in FIG. 3. That is, the optical transmitter 2' shown in FIG. 5 includes odd number of sub modulators M11, M12 and M13 while the optical transmitter 2 shown in FIG. 3 includes even number of sub modulators M11, M12, M13 and M14. In addition, although illustration is omitted in FIG 5, a bias control unit is also disposed on the optical transmitter 2' that is the same as the bias control unit 60 shown in FIG. 4. However, since the optical transmitter 2' includes the optical attenuator 65 instead of the sub modulator M14 shown in FIG. 3, composition concerning the bias signal B14 is omitted.

The optical attenuator 65 makes a compensation for an insertion loss of the sub modulator M13 in the sub modulator M3. The optical attenuator can use a colored glass, a metal thin film, etc. The optical attenuator 65 makes it possible to adjust amount of attenuation of two branched lights branched by the sub modulator M3 to become equal. In addition, an adjustment of a phase change of a branched light caused by the optical attenuator 65 can be performed by the bias signal B22 applied to the bias electrode 23b disposed on the sub modulator M3.

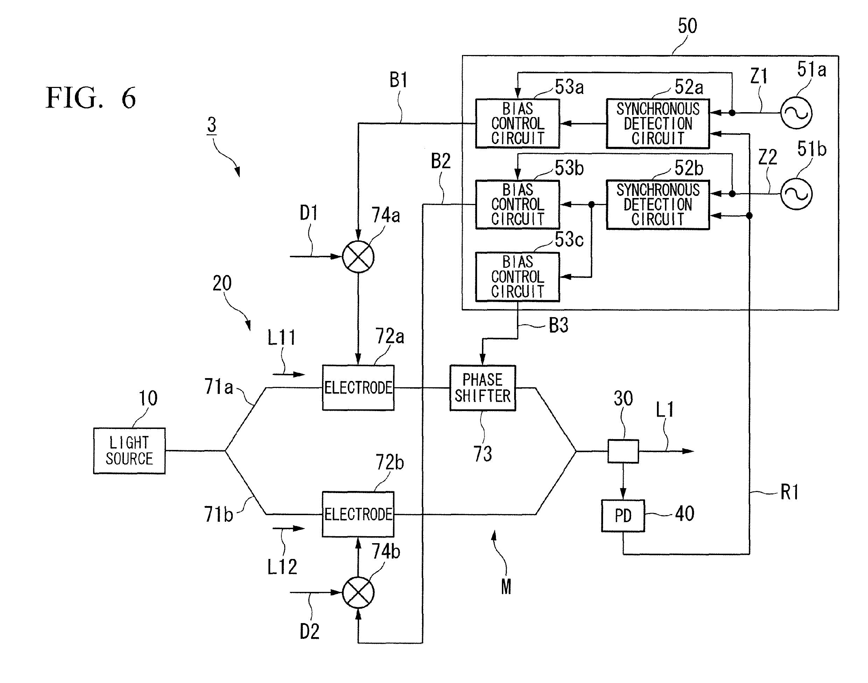

FIG. 6 is a block diagram showing a principal composition of an optical transmitter by a third embodiment of the invention. As shown in FIG. 6, the third embodiment provides an optical transmitter 3. The optical transmitter 3 includes a light source 10, a modulation unit 20, an optical directional coupler 30, a photodetector 40, and a bias control unit 50 in the same way as the optical transmitter 1 shown in FIG 1. However, a composition of the modulation unit 20 is different from that of the first embodiment and the point that the optical transmitter includes mixers 74a and 74b is different from the first embodiment.

The modulation unit 20 includes a Mach-Zehnder modulator M (a modulator M) having a pair of arms 71a and 71b. The modulator M receives a continuous light from the light source 10, branches the continuous light to an optical signal L11 (a first optical signal) passing through the arm 71a and an optical signal L12 (a second optical signal) passing through the arm 71b. The modulator M sets up a phase difference between the optical signals L11 and L12, modulates the optical signals L11 and L12 respectively based on a data signal D1 (a first data signal) and a data signal D2 (a second data signal) input from outside, and couples the modulated optical signals to be output.

On the arm 71a of the modulator M, an electrode 72a applied with the data signal D1 and a phase shifter 73 applied with a bias signal B3 output from the bias control unit 50 are disposed. On the arm 71b, an electrode 72b applied with a data signal D2 and a bias signal B2 output from the bias control unit 50 are disposed. Two optical signals are modulated respectively by the data signals D1 and D2 applied respectively to the electrodes 72a and 72b. An adjustment of a driving point is performed by the bias signals B1 and B2 applied respectively to electrodes 72a and 72b, and dither signals Z1 and Z2 are respectively superimposed on the optical signals L11 and L12.

The phase shifter 73 gives π/2 of phase difference between the optical signal L11 passing through the arm 71a and the optical signal L12 passing through the arm 71b. A pair of electrodes is disposed on the phase shifter 73 so that a waveguide which the optical signal L11 passes thorough is disposed between the electrodes, for example. And the phase shifter 73 gives π/2 of phase difference between the optical signals L11 and L12 by applying the bias signal B3 to the pair of electrodes. In addition, a fine tuning of a phase difference is made possible by performing a fine tuning of a bias signal applied to a pair of electrodes disposed on the phase shifter 73.

The mixer 74a performs a multiplication of the data signal D1 and the bias signal B1 output from the bias control unit 50. The mixer 74b performs a multiplication of the data signal D2 and the bias signal B2 output from the bias control unit 50. Signals multiplexed in the mixers 74a and 74b are applied respectively to the electrodes 72a and 72b disposed respectively on the arms 71a and 71b of the modulator M.

A fundamental operation of the optical transmitter 3 in the above-mentioned composition is the same as that of the optical transmitter 1 in the first embodiment. Concerning about control of bias signal, first, controls of the bias signals B1 and B2 are performed respectively in the bias control circuits 53a and 53b, and after the controls of the bias signals B1 and B2 are finished, control of the bias signal B3 is performed in the bias control circuit 53c. Order of performing controls in the bias control circuits 53a and 53b and control in the bias control circuit 53c is arbitrary as long as controls in the bias control circuits 53a and 53b and control in the bias control circuit 53c are performed at different times.

As explained above, in the third embodiment, the bias control unit 50 includes the dither signal generation units 51a and 51b and the synchronous detection circuits 52a and 52b like the first embodiment. The dither signal generation units 51a and 51b respectively generate the dither signals Z1 and Z2 superimposed on the bias signals B1 and B2 respectively. The synchronous detection circuits 52a and 52b make a synchronous detection of the dither signals Z1 and Z2 included in the electrical signal R1 output from the photodetector 40. The bias control circuit 53c performs control of voltage of the bias signal B3 based on a detected signal output from the synchronous detection circuit 52b.

Therefore, neither of a dither signal generation unit nor a synchronous detection circuit for the bias control circuit 53c is needed, and circuit scale of the bias control unit 50 can be made smaller. Moreover, it is not necessary to superimpose a dither signal on the bias signal B3, and voltage of the bias signal B3 can be made smaller by amplitude of the dither signal, so electric discharge can be prevented and high reliability can be acquired.

Moreover, also in the third embodiment, control of the bias signal B3 by the bias control circuit 53c can be performed by a detected signal output from the synchronous detection circuit 52a like the first embodiment. When controls by the bias control circuits 53a and 53b are performed at different times, frequency of the dither signals Z1 and Z2 can be the same. When frequency of the dither signals Z1 and Z2 are the same, one dither signal generation unit and one synchronous detection circuit can be shared in the bias control circuits 53a, 53b and 53c, so circuit scale can be made smaller. Furthermore, the data signals D1 and D2 input from outside may be differential signals which reversed logic mutually and respectively, or may be individual signals which are mutually unrelated. And the phase shifter 73 may be disposed on the arm 71b and may be disposed on a previous step of the electrodes 72a and 72b.

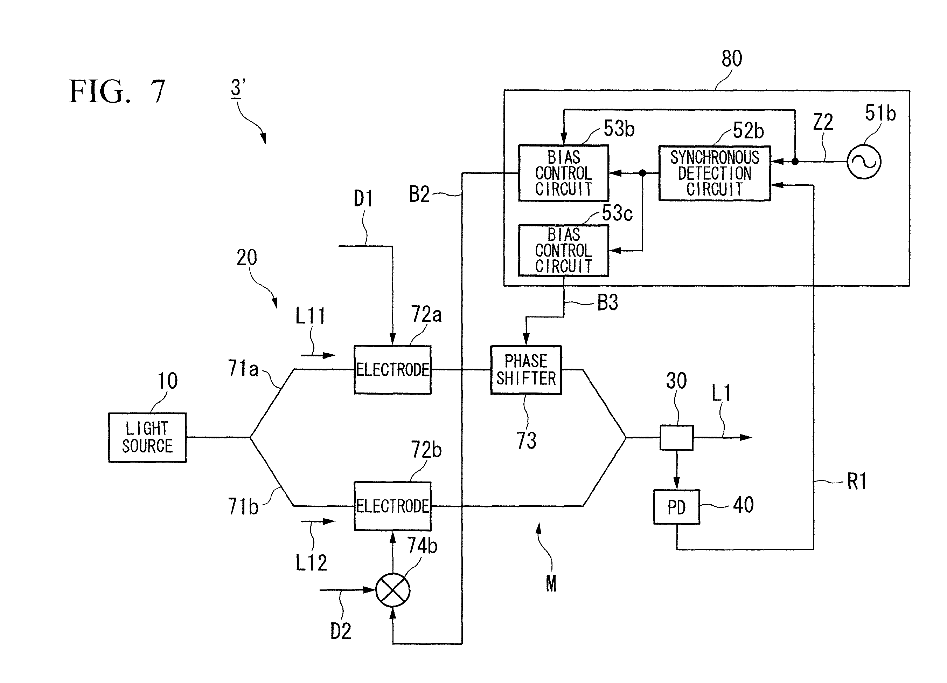

FIG. 7 is a figure showing a modification of the optical transmitter of the third embodiment of the invention. As shown in FIG. 7, the modification provides an optical transmitter 3'. The optical transmitter 3' includes a bias control unit 80 instead of the bias control unit 50 in the third embodiment shown in FIG. 6, and omits the mixer 74a. As a result, in the optical transmitter 3' shown in FIG. 7, only the data signal D1 is applied to the electrode 72a. The phase shifter 73 can be disposed on the arm 71b instead of 71a.

The bias control unit 80 has a composition that omits the dither signal generation unit 51a, the synchronous detection circuit 52a, and the bias control circuit 53a from the bias control unit 50 in the third embodiment shown in FIG. 6, and outputs only the bias signals B2 and B3. Above-mentioned composition enables circuit scale to be far smaller.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. An optical transmitter comprising:
a modulation unit that sets up a phase difference between first and second optical signals acquired by branching an input light, the modulation unit modulating the first and second optical signals based on first and second input data signals, respectively, the modulation unit coupling the modulated first and second optical signals to generate a phase-modulated optical signal;
an optical receiving unit that receives the phase-modulated optical signal from the modulation unit, the optical receiving unit generating an electric signal based on the phase-modulated optical signal; and
a control unit that superimposes a dither signal having a frequency on at least one of the first and second optical signals, the control unit performing a detection on the dither signal that is included in the electric signal output from the optical receiving unit, the control unit controlling the modulation unit to control the phase difference based on a result of the detection on the dither signal.

2. The optical transmitter according to claim 1, wherein the modulation unit comprises:
a first modulation unit that sets up a first phase difference between two first branched optical signals acquired by further branching the first optical signal, the first modulation unit modulating the first branched optical signals based on two first data signals, respectively, the two first data signals belonging to the first data signal; and
a second modulation unit that sets up a second phase difference between two second branched optical signals acquired by further branching the second optical signal the second modulation unit modulating the second branched optical signal based on two second data signals, respectively, the two second data signals belonging to the second data signal.

3. The optical transmitter according to claim 2, wherein the controlling unit comprises:
a first control unit that superimposes a first dither signal having a first frequency on the first branched optical signal, the first control unit performing a first detection on the first dither signal that is included in the electric signal output from the photodetector, the first control unit controlling the first modulation unit to control the first phase difference based on a result of the first detection;
a second control unit that superimposes a second dither signal having a second frequency on the second branched optical signal, the second control unit performing a second detection on the second dither signal that is included in the electric signal output from the photodetector, the second control unit controlling the second modulation unit to control the second phase difference based on a result of the second detection; and
a third control unit that controls a third phase difference between the first and second optical signals based on the results of the first and second detections.

4. The optical transmitter according to claim 2, wherein the two first data signals belonging to the first data signal are logically inverted to each other, and the two second data signals belonging to the second data signal are logically inverted to each other.

5. The optical transmitter according to claim 2, wherein the two first data signals belonging to the first data signal are independent from each other, and the two second data signals belonging to the second data signal are independent from each other.

6. The optical transmitter according to claim 1, wherein the control unit superimposes the dither signals having different frequencies on the first and second optical signals, respectively.

7. The optical transmitter according to claim 1, wherein the control unit superimposes the dither signals having the same frequency on the first and second optical signals at different timings.

8. An optical transmitter comprising:
a modulation unit that performs phase modulation of first and second optical signals to generate first and second modulated optical signals, the first and second optical signals having been acquired by branching an input light; and
a control unit that controls the modulation unit,
wherein the control unit comprises:
a first dither signal generator that generates a first dither signal having a first frequency;
a first detecting circuit that generates a first detected signal;
a first bias control circuit that receives the first dither signal from the first dither signal generator, the first bias control circuit receiving the first detected signal from the first detecting circuit, the first bias control circuit generating a first bias signal that is superimposed with the first dither signal, the voltage of the first bias signal being controlled based on the first detected signal, the first bias control circuit applying the first bias signal to the modulation unit at a first timing, so as to control the phase of the first optical signal; and
a second bias control circuit that receives the first detected signal from the first detecting circuit, the second bias control circuit generating a second bias signal that is free of any dither signal, the voltage of the second bias signal being controlled based on the first detected signal, the second bias control circuit applying the second bias signal to the modulation unit at a second timing different from the first timing, so as to control the phase of the second optical signal, the second bias control circuit cooperating with the first bias control circuit to control a phase difference between the first and second optical signals.

9. The optical transmitter according to claim 8, further comprising:
a second dither signal generator that generates a second dither signal having a second frequency that is different from the first frequency;
a second detecting circuit that generates a second detected signal; and
a third bias control circuit that receives the second dither signal from the second dither signal generator, the third bias control circuit receiving the second detected signal from the second detecting circuit, the third bias control circuit generating a third bias signal that is superimposed with the second dither signal, the voltage of the third bias signal being controlled based on the second detected signal, the third bias control circuit applying the third bias signal to the modulation unit at a third timing being the same as the first timing, so as to control the phase of the second optical signal, the third bias control circuit cooperating with the first and second bias control circuits to control the phase difference between the first and second optical signals.

10. The optical transmitter according to claim 8, further comprising:
a third bias control circuit that receives the first detected signal from the first detecting circuit, the third bias control circuit generating a third bias signal that is free of any dither signal, the voltage of the third bias signal being controlled based on the first detected signal, the third bias control circuit applying the third bias signal to the modulation unit at a third timing different from the first timing and the second timing, the third bias control circuit cooperating with the first and second bias control circuits to control the phase difference between the first and second optical signals.

11. The optical transmitter according to claim 8, wherein the modulation unit couples the first and second modulated optical signals to generate a phase-modulated optical signal, and
the optical transmitter further comprises:
an optical receiving unit that receives the phase-modulated optical signal from the modulation unit, the optical receiving unit generating an electric signal from the phase-modulated optical signal, the optical receiving unit supplying the electric signal to the first detecting circuit,
wherein the first detecting circuit receives the electric signal from the optical receiving unit, the first detecting circuit receives the first dither signal from the first dither signal generator, and the first detecting circuit performs a first detection of the first dither signal from the electric signal to generate the first detected signal.

12. The optical transmitter according to claim 11, wherein the optical receiving unit comprises:
an optical splitter that receives the phase-modulated optical signal from the modulation unit; and
a photodetector that receives the phase-modulated optical signal from the optical splitter, the photodetector generating an electric signal from the phase-modulated optical signal, the photodetector supplying the electric signal to the first detecting circuit.

13. The optical transmitter according to claim 9, wherein the modulation unit couples the first and second modulated optical signals to generate a phase-modulated optical signal, and
the optical transmitter further comprises:
an optical receiving unit that receives the phase-modulated optical signal from the modulation unit, the optical receiving unit generating an electric signal from the phase-modulated optical signal, the optical receiving unit supplying the electric signal to the first and second detecting circuits,
wherein the first detecting circuit receives the electric signal from the optical receiving unit, the first detecting circuit receives the first dither signal from the first dither signal generator, and the first detecting circuit performs a first detection of the first dither signal from the electric signal to generate the first detected signal, and
wherein the second detecting circuit receives the electric signal from the optical receiving unit, the second detecting circuit receives the second dither signal from the second dither signal generator, and the second detecting circuit performs a second detection of the second dither signal from the electric signal to generate the second detected signal.

14. The optical transmitter according to claim 13, wherein the optical receiving unit comprises:
an optical splitter that receives the phase-modulated optical signal from the modulation unit; and
a photodetector that receives the phase-modulated optical signal from the optical splitter, the photodetector generating an electric signal from the phase-modulated optical signal, the photodetector supplying the electric signal to the first and second detecting circuits.

15. The optical transmitter according to claim 9, wherein the modulation unit comprises:
a first optical modulator that receives the first bias signal from the first bias control circuit, the first optical modulator modulating the first optical signal based on a first input data signal, and the first optical modulator controlling the phase of the first optical signal based on the first bias signal;
a second optical modulator that receives the third bias signal from the third bias control circuit, the second optical modulator modulating the second optical signal based on a second input data signal, and the second optical modulator controlling the phase of the second optical signal based on the third bias signal; and
a phase shifter that receives the second bias signal from the second bias control circuit, the phase shifter controlling the phase of the second optical signal based on the second bias signal.

16. The optical transmitter according to claim 9, further comprising:
a first mixer that receives the first bias signal from the first bias control circuit, the first mixer receiving the first input data signal, the first mixer multiplexing the first bias signal and the first input data signal to generate a first output signal; and
a second mixer that receives the third bias signal from the third bias control circuit, the second mixer receiving the second input data signal, the second mixer multiplexing the third bias signal and the second input data signal to generate a second output signal,
wherein the modulation unit comprises:
a first optical modulator that receives the first output signal from the first mixer, the first optical modulator modulating the first optical signal based on the first output signal, and the first optical modulator controlling the phase of the first optical signal based on the first output signal;
a second optical modulator that receives the second output signal from the second mixer, the second optical modulator modulating the second optical signal based on the second output signal, and the second optical modulator controlling the phase of the second optical signal based on the second output signal; and
a phase shifter that receives the second bias signal from the second bias control circuit, the phase shifter controlling the phase of the second optical signal based on the second bias signal.

17. The optical transmitter according to claim 8, wherein the modulation unit comprises:
a first optical modulator that receives the first bias signal from the first bias control circuit, the first optical modulator modulating the first optical signal based on a first input data signal, and the first optical modulator controlling the phase of the first optical signal based on the first bias signal;
a second optical modulator that receives a second input data signal, and the second optical modulator modulating the second optical signal based on the second input data signal; and
a phase shifter that receives the second bias signal from the second bias control circuit, the phase shifter controlling the phase of the second optical signal based on the second bias signal.

18. The optical transmitter according to claim 8, further comprising:
a first mixer that receives the first bias signal from the first bias control circuit, the first mixer receiving a first input data signal, the first mixer multiplexing the first bias signal and the first input data signal to generate a first output signal,
wherein the modulation unit comprises:
a first optical modulator that receives the first output signal from the first mixer, the first optical modulator modulating the first optical signal based on the first output signal, and the first optical modulator controlling the phase of the first optical signal based on the first output signal;
a second optical modulator that receives a second input data signal, the second optical modulator modulating the second optical signal based on the second input data signal; and
a phase shifter that receives the second bias signal from the second bias control circuit, the phase shifter controlling the phase of the second optical signal based on the second bias signal.

19. The optical transmitter according to claim 8, further comprising:
an optical receiving unit that receives the phase-modulated optical signal from the modulation unit, the optical receiving unit generating an electric signal from the phase-modulated optical signal, wherein the first detecting circuit receives the electric signal from the optical receiving unit, the first detecting circuit receives the first dither signal from the first dither signal generator, and the first detecting circuit performs a first detection of the first dither signal from the electric signal to generate the first detected signal;
a second dither signal generator that generates a second dither signal having a second frequency that is different from the first frequency;
a second detecting circuit that receives the electric signal from the optical receiving unit, the second detecting circuit receiving the second dither signal from the second dither signal generator, and the second detecting circuit performing a second detection of the second dither signal from the electric signal to generate a second detected signal; and
a third bias control circuit that receives the second dither signal from the second dither signal generator, the third bias control circuit receiving the second detected signal from the second detecting circuit, the third bias control circuit generating a third bias signal that is superimposed with the second dither signal, the voltage of the third bias signal being controlled based on the second detected signal,
wherein the modulation unit comprises:
a first optical modulator that branches the first optical signal into first and second branched optical signals;
a second optical modulator that branches the second optical signal into third and fourth branched optical signals; and
a phase shifter that receives the second bias signal from the second bias control circuit, the phase shifter controlling the phase of the second optical signal based on the second bias signal,
wherein the first optical modulator comprises:
a first optical sub-modulator that receives the first branched optical signal, the first optical sub-modulator receiving the first bias signal from the first bias control circuit, the first optical sub-modulator modulating the first branched optical signal based on a first input data signal, and the first optical sub-modulator controlling the phase of the first branched optical signal based on the first bias signal; and
a second optical sub-modulator that receives the second branched optical signal, the second optical sub-modulator modulating the second branched optical signal based on a second input data signal, and
wherein the second optical modulator comprises:
a third optical sub-modulator that receives the third branched optical signal, the third optical sub-modulator receiving the third bias signal from the third bias control circuit, the third optical sub-modulator modulating the third branched optical signal based on a third input data signal, and the third optical sub-modulator controlling the phase of the third branched optical signal based on the third bias signal; and
a fourth optical sub-modulator that receives the fourth branched optical signal, the fourth optical sub-modulator modulating the fourth branched optical signal based on a fourth input data signal.

20. The optical transmitter according to claim 8, further comprising:
an optical attenuator that compensates an insertion loss that is caused by modulation by the optical modulator.
